# EUROPEAN PATENT SPECIFICATION

(11) **EP 2 102 552 B1**
(45) Date of publication and mention of the grant of the patent: **22.03.2017**
(21) Application number: 07858961.1
(22) Date of filing: 06.12.2007
(51) Int. Cl.: F23J 15/00, F23G 5/00, F23G 5/46, F23J 15/02, F23G 5/02, F23J 15/04, F23G 5/04

(54) **INTEGRATED PROCESS AND RELATED SYSTEM FOR OBTAINING ENERGY FROM WASTE WITH LOW INVESTMENTS AND HIGH THERMICAL-ELECTRIC YIELDS**
INTEGRIERTES VERFAHREN UND VERWANDTES SYSTEM ZUM ERHALT VON ENERGIE AUS ABFALL UNTER GERINGER INVESTITION UND MIT HOHER THERMISCH-ELEKTRISCHER AUSBEUTE
PROCÉDÉ INTÉGRÉ ET SYSTÈME APPARENTÉ PERMETTANT D'OBTENIR DE L'ÉNERGIE À PARTIR DES DÉCHETS AVEC DE FAIBLES INVESTISSEMENTS ET DES RENDEMENTS THERMIQUE-ÉLECTRIQUES ÉLEVÉS

(30) Priority: 12.12.2006 IT MI20062381
(43) Date of publication of application: 23.09.2009
(73) Proprietor: A2A Ambiente S.P.A., 25124 Brescia (BS) (IT)
(72) Inventor: NATTA, Giuseppe, 27010 Giussago (PV) (IT); DONATI, Gianni, 27010 Giussago (PV) (IT); DONATI, Cristina, 27010 Giussago (PV) (IT)
(74) Representative: Bottero, Claudio
(86) International application number: PCT/IB2007/003781
(87) International publication number: WO 2008/072052

(56) References cited:
- EP-A- 1 416 223
- EP-A- 1 508 386
- WO-A-2005/102547
- CA-A1- 2 339 457
- CH-A5- 685 981
- DE-C1- 19 621 751

## Description

### Field of application

The present invention relates to an integrated process of known technologies such as the BIOCUBI^{®} process for the bio-drying and stabilisation of Municipal solid waste (MSW) anaerobic digestion in bioreactors for the production of biogas and incineration of the residual fraction of the bioreactors.

The present invention discloses a new process and method, and a related system, for integrating these technologies in order to increase thermoelectric yields and hence with maximisation of the production of electrical energy.

### State of the art

Municipal solid waste (MSW) from selective collection, after having been compacted, is generally dumped in controlled landfills with previously waterproofed bases according to the prior art (conventional landfill).

The growing production of waste, the consequent need for further spaces for controlled landfills and the problems of environmental impact of traditional landfills have encouraged the development of disposal methods as alternatives to dumping in conventional landfills.

Among these we can mention the incineration of the original MSW or a new technology, which is now becoming widespread in Italy and the whole of Europe, and which consists of conversion of the MSW into inert materials which can be compacted and dumped without environmental impact or can easily be transported and fed for combustion to produce electrical energy.

The patent EP 0706839 of the same Applicant shows how the MSW can be treated by aerobic digestion of the putrescible material with low heating value to evaporate the water and obtain a fuel with a high heating value to be fed for combustion.

Refuse-derived fuel (RDF), which we will refer to as RDF, can be fed into grate combustors or, refined further, can be used in fluidised bed combustors or in cement works.

This patent also shows how, without combustion systems, said fuel is odourless, stable and free from pathogens and, when dumped, does not therefore have the problems of environmental impact of conventional MSW landfills.

The patent EP 1386675 shows in detail a possible version of the plant and of the system of control and management of the process.

It is however known that combustion of waste and also of RDF has technological limitations concerning the combustion yields, caused mainly by the presence of chlorine and hence of chlorides that are corrosive to the superheaters which advise operation with low temperatures of the steam in the boiler and typically of around 400°C, with consequent low electrical energy yields compared to the combustion of fossil fuels and typically of around 25%.

The small scale of the local incinerators that limits the yields and increases investments per unit of fuel burnt increases this disadvantage.

To improve the yields, in patents EP 1382806, EP 1416223, EP 1428987 and EP 1430952 the Applicant has in turn proposed the combination of large waste combustors with a conventional thermoelectric plant, so as to use in the best possible way the steam produced while maintaining the limit of 400°C on the incinerator super heaters.

The thermoelectric yields rise in this way to around 32% although, however, the presence of a power plant available for the integration is required.

It was later found that the RDF, dumped in a non-conventional landfill, if wetted thoroughly, can be activated on demand for the production of biogas, showing very high productivity levels compared to those of a conventional landfill.

The patent EP 1520634 of the same Applicant gives the results obtained directly at an unconventional landfill, introducing the concept of bioreactor, which has already been demonstrated on an industrial scale at the site at Corteolona (PV) with the production of 4 MW of electrical energy using internal combustion engines.

The document DE 196 21 751 C1 shows a waste disposal process and apparatus that combine incineration and fermentation/composting processes. Organic residues are composted and the resulting gases and waste water are collected. The incineration furnace receives combustible gases via a gas pipe from the composting assembly. Inorganic residues are incinerated using gas from the composting assembly.

The patent application WO2005102547 of the same Applicant provides an integration of the bio-drying plant for the production of RDF and a refinement process to produce a fuel with high heating value with the bioreactor for producing electrical energy.

This integration is partial, since said fuel has then to be transported to a combustion plant: however a first industrial realisation is already available at the site of Villafalleto (CN).

It should finally be noted that, among the technologies presented to date, the activatable bioreactor represents the most economical solution from the point of view of investments, followed immediately by bio-drying for producing RDF while combustion is by far the most expensive one.

Therefore the first two technologies are immediately available, have advantages from the point of view of environmental impact and social acceptability and therefore represent a concrete and easily implemented solution to the problem of waste.

The combustion of the waste can be performed subsequently when the first two stages of treatment and storage are completed.

### Description of the invention

The general object of the present invention is that of eliminating the disadvantages described above by making available a method and a related system which allows maximum exploitation of the energy content of the waste with minimum investments and above all by staggering these investments in time.

A further object is that of treating waste, transforming it into RDF and therefore making it inert and ensuring safe storage of the fuel produced in this way in the bioreactors.

A further object is that of making available a method for recovering from the activatable bioreactors energy at a high level in the form of purified biogas without chlorinated substances and therefore such as to be used to improve the heat content level of the steam produced by the combustion of RDF or better from the residual fraction of the bioreactors.

An additional object is that of reducing the load of contaminated waste at the combustor, reducing at the same time the investments and recovering the inefficiencies of the combustor by means of the purified biogas.

These objects, and others that are to be described in greater detail herein below, are achieved by a method and by a process, which considers the entire life cycle of the waste and integrates the available technologies synergically.

The method according to the invention has the features of the annexed independent claim 1.

Advantageous embodiments are described in the dependent claims. The method therefore constitutes an alternative to the traditional system of combustion in incinerators of the MSW and of the fuels derived therefrom and to their dumping.

The method also constitutes an alternative to those already implemented industrially or proposed by the same Applicant as demonstrated in the prior art.

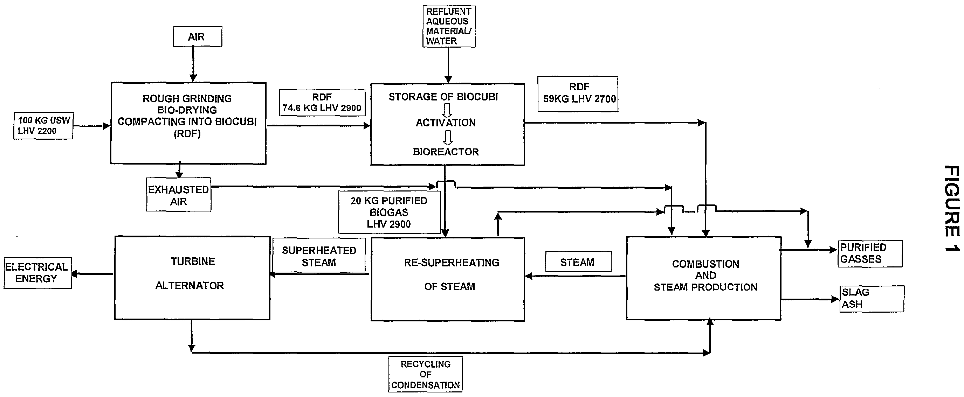

Referring to Fig. 1, the process can be schematised as follows:
a) Biostabilisation by the method described in EP 0706839 and EP 1386675 with the object of transforming MSW into a dry and homogeneous material with piece size of around 20-30 cm and which can be treated easily (RDF).
b) Compacting of RDF into bales or BIOCUBI^{®} with size of around 1 x 1 x 2 m and storage of the BIOCUBI^{®} in the bioreactors as described in EP 1520634 and WO2005102547.
c) Activation of the bioreactors by wetting with water to produce biogas: the sizes of the bioreactors are such as to form large reservoirs of biogas and the times for the completion of the anaerobic process are reduced so as to make available in a shorter time, compared to a conventional landfill, (5-6 years) the non-biodegradable residue formed by inert and plastic. The biogas produced is purified of the possible residual traces of chlorinated products by means of known techniques, e.g. passage over active carbon beds.
   c1) Purifying the biogas obtained of possible residual traces of chlorinated products.
d) Combustion at the start of RDF and subsequently of the residue already digested in the bioreactors, and therefore non-biodegradable, in a waste combustor equipped with a system of purification of exhaust gasses and production of superheated steam at approximately 400°C and pressure around 70 bars.
e) Combustion of the purified biogas in a conventional boiler equipped with re-superheaters for raising the temperature of the steam produced by the waste combustor by approximately 100°C.
f) Use of the steam produced in this way in a turbine coupled with an alternator for the production of electrical energy.

A further possible integration presented in Fig. 1 is represented by the use of the contaminated air released by the process of bio-drying for the combustion of the waste.

In this way it is possible to eliminate, wholly or in part, the treatment of the air released by bio-drying.

Bio-drying is described in detail in the aforementioned patents and serves to dry and stabilise the waste and produce substrates that can be activated and are particularly reactive for the anaerobic digestion in the bioreactors.

To sum up, the waste and in particular the MSW is fed in a closed space where it is ground roughly and arranged in layers on a floor with holes which is divided into sectors through which the air is passed: aerobic digestion of the putrescible part develops heat which evaporates the water which is removed with the air flow.

Starting with 100 kg of MSW having a humidity content of around 36% and a lower heating value (LHV) of 2200 kcal/kg, 75 kg of RDF are obtained with a humidity content of around 19% and an LHV of around 2900 kcal/kg.

The product obtained in this way is odourless and stable, is compressed into bales or BIOCUBI^{®} with density of around 700 kg/m³ and placed in the bioreactor.

The BIOCUBI^{®} can be produced on site or easily transported from production systems distributed in the territory.

The bioreactor is also divided into sectors as described in WO2005102547 so as to activate it by injecting water into each sector in sequence over the years and have a continuous production of biogas and at capacity a tank and continuous availability of exhausted material at the end of the life of each sector.

In time it may be possible to reduce the use of water, replacing it with percolates or other liquid effluents containing digestible substances and therefore able to form an additional source of biogas.

The bioreactors are completely covered by a polymeric membrane, which ensures the containment of the biogas produced and are equipped with internal manifolds for its collection.

They therefore represent large tanks suitable for guaranteeing availability of the gaseous fuel for the process.

When a sector ends production, the biodegradable portion being exhausted and the part composed of soil, plastic and part of the wood remaining, air is aspirated or blown so as to eliminate part of the residual water and obtain a humidity content of between 20 and 25%.

Optionally, in order to accelerate evaporation of the water and/or obtain low residual humidity of the waste, hot air or mixtures of air/gasses from the combustion could be used (not shown in the drawings).

Again on the basis of 100 kg of MSW initially, the product of the bioreactors is typically 59-63 kg of exhausted material having an LHV of around 2700-2600 kcal/kg.

15-20 kg of biogas are also produced with a content of methane of around 45-55% in volume, according to the nature of the initial material, and having an LHV of around 2900 kcal/kg.

At this point the significant reduction in the solids fed to the combustor and the improvement in the energy content of the fuels to be burnt compared to the initial MSW should be noted.

The combustor of the solid waste has a reduced load and with improved efficiency and the purified biogas is used partially or totally in an additional boiler for re-superheating the superheated steam, allowing the limit of 400°C of conventional combustors to be exceeded.

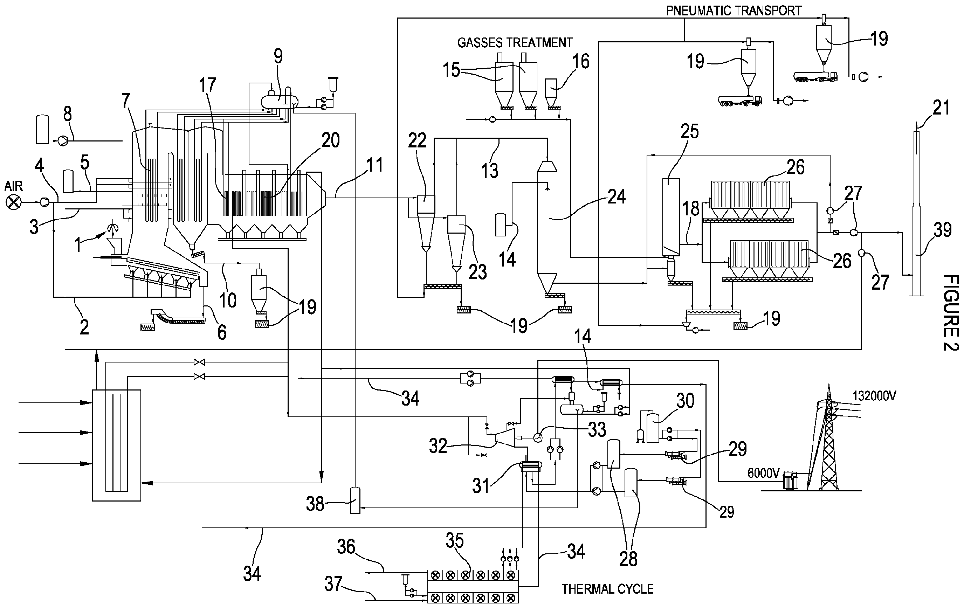

Referring to the diagram of Fig. 2, the combustor is for example composed of a grate furnace provided with a boiler for the production of superheated steam at 400°C and 70 bar, equipped with the combustion gasses purification line formed by a series of cyclones for abating the substantial part of the solids conveyed, a cooling tower for controlling the temperature, a reactor fed with lime and active carbons for the neutralisation of the residual acidity and the adsorption of the micropollutants and a bag filter for retaining the fine dust before emission at the stack.

The superheated steam generated in the boiler, and possibly a share of control water, is sent to the superheater fed with biogas where the temperature of the steam is raised by around 100°C according to the biogas available.

This steam, expanded in the turbine, allows a yield of the thermal cycle of Fig. 2 of around 32% to be obtained and therefore similar to that which can be achieved with the waste combustor coupled with a thermoelectric plant.

The results obtained with the invention claimed here are given in the following examples of application, based on the experience of industrial bio-drying systems, on experiments of a system for the production of biogas and on available waste combustors.

### EXAMPLE

The intent is to build a large waste combustor having a supplied thermal power of 110 MWt such as that in Fig. 2, using the innovative cycle, which is the object of the present invention, shown schematically in Fig. 1.

The combustor is fed with 34 t/h of solid waste obtained from the bioreactor starting from 43 t/h of RDF obtained in turn through bio-drying from 58 t/h of MSW.

The boiler of the combustor produces, dispersed heat accounted, 122 t/h of steam superheated at 400°C and 70 bar which is sent to the re-superheater fed with 6.8 t/h of biogas produced in the bioreactor.

128 t/h of superheated steam are produced at 492°C of which 6 t/h of steam from temperature control added water.

This steam, expanded in the turbine, generates, including the yields of the machines, 35.5 Mwe with a yield of the thermoelectric cycle of over 32%.

The process plan proposed therefore represents a valid alternative to the integration of the waste combustor with a thermoelectric plant if this plant is not available on site.

The large reduction in the solid waste to be burnt compared to the combustion of RDF and above all of MSW should be remarked, thanks to the production of the biogas that, in the process, which is the object of the present invention, serves to raise the heat level of the steam and therefore the yields of the entire cycle.

### References

- 1.: Solid waste
- 2.: Air I
- 3.: Gasses recycle
- 4.: Air II
- 5.: NaOH
- 6.: Residue
- 7.: Gasses
- 8.: NH₃
- 9.: Cylindrical body
- 10.: Ashes line
- 11.: Gasses line
- 13.: Gasses line
- 14.: Water
- 15.: Lime
- 16.: Active carbon
- 17.: Evaporator
- 18.: Gasses
- 19.: Ashes
- 20.: Superheater
- 21.: Purified gasses
- 22.: Cyclone
- 23.: Cyclone
- 24.: Quencher
- 25.: Contacting reactor
- 26.: Bag Filter
- 27.: Fan
- 28.: Demineralised water
- 29.: Reverse osmosis
- 30.: Raw water tank
- 31.: Condenser
- 32.: Turbine
- 33.: Alternator
- 34.: Cooling water
- 35.: Cooling towers
- 36.: Purge
- 37.: Make-up
- 38.: Continuous purge
- 39.: Stack

## Claims

1. Process for obtaining energy from waste, comprising the steps of:
a) bio-drying municipal solid waste (MSW) to transform said waste into refuse-derived fuel (RDF), a dry, homogeneous material with piece size of about 20 to about 30 cm;
b) compacting the material obtained from step a) into bales and storing the bales in bioreactors;
c) activating the bioreactors by wetting with water to produce biogas and a non-biodegradable residue through anaerobic digestion;
c1) purifying the biogas obtained in step c) of possible residual traces of chlorinated products;
d1) combusting at the start of the process the refuse-derived fuel (RDF) obtained from step a);
d2) subsequently combusting the non-biodegradable residue digested in the bioreactors in step c) in a waste combustor provided with a system for purification of the combustion gasses and production of superheated steam at about 400°C and pressure of about 70 bar;
e) combusting the purified biogas obtained in step c1) in a conventional boiler equipped with re-superheaters for raising the temperature of the steam produced by the waste combustor by about 100°C; and
f) using of the steam produced in this way in a turbine coupled with an alternator for the production of electrical energy.

2. Process according to claim 1, wherein contaminated air released by the bio-drying process of step a) is used for the combustion of waste in step d).

3. Process according to claim 1 or 2, wherein said bio-drying of step a) takes place by feeding the municipal solid waste (MSW) in a closed space, where the waste is ground roughly and placed in heaps on a floor with holes, and which is divided into sectors via which air is passed, the aerobic digestion of the putrescible part of the waste developing heat which evaporates water which is removed with an air current.

4. Process according to claim 1, wherein said bales have a size of about 1 x 1 x 2 m and a density of about 700 kg/m³.

5. Process according to claim 1, wherein said bales are produced on site or transported from production stations distributed in the territory.

6. Process according to claim 1, wherein said bioreactors used in step c) are divided into sectors forming large storage tanks which can be activated by injecting water into each of them in sequence over the years, so as to provide a continuous production of biogas and provide, at the end of the life of each sector, continuous availability of non-biodegradable exhausted material, made up of inert and plastic.

7. Process according to claim 6, wherein at the end of the life of each sector of the bioreactor air is blown or aspirated so as to eliminate part of the residual water and obtain a low content of humidity between 20 and 25%.

8. Process according to claim 7, wherein, in order to accelerate evaporation of the water and/or obtain low residual humidity of the waste, hot air or mixtures of air/gasses from the combustion are used.

9. Process according to claim 1, wherein the biogas produced in step c1) is purified of possible residual traces of chlorinated products by passage on active carbon beds.

10. Process according to claim 1, wherein the steam, expanded in the turbine, allows to obtain a yield of the thermal cycle of about 32%.

11. System for obtaining energy from waste by implementing the process according to any one of claims 1 to 10, comprising:
- a bio-dryer for drying and stabilising municipal solid waste (MSW) for producing refuse-derived fuel (RDF), said refuse-derived fuel (RDF) being a material which can be activated and particularly reactive for anaerobic digestion in bioreactors;
- means for compacting said material into bales;
- at least one bioreactor fed with said bales for producing biogas;
- a waste combustor provided with a combustion gasses purification system and production of superheated steam;
- a boiler for combusting a biogas purified of possible residual traces of chlorinated products, the boiler being provided with re-superheaters for raising the temperature of the steam produced by the waste combustor;
- a turbine coupled with an alternator for the production of electrical energy.

12. System according to claim 11, wherein said combustion gasses purification system consists of a series of cyclones for abating a substantial part of the solids conveyed, a cooling tower for controlling the temperature, a reactor fed with lime and active carbons for neutralising the residual acidity and adsorption of the micropollutants and a bag filter for retaining the fine dust before emission at the stack.

## Patentansprüche

1. Verfahren zur Energiegewinnung aus Abfall, umfassend folgende Schritte:
a) biologisches Trocknen des festen Hausmülls (FHM), um ihn in Brennstoff aus Abfall (RDF), ein trockenes, homogenes Material mit einer Korngröße zwischen 20 und 30 cm, zu verwandeln;
b) Verpressen des in Schritt a) erhaltenen Materials zu Ballen und Lagern der Ballen in Bioreaktoren;
c) Aktivieren durch Benetzen mit Wasser zur Erzeugung von Biogas und einem biologisch nicht abbaubaren Rückstand durch anaerobe Vergärung;
c1) Reinigen des in Schritt c) erhaltenen Biogases von möglichen Restspuren chlorierter Produkte;
d1) Verbrennen des in Schritt a) erhaltenen, aus Abfall gewonnenen Brennstoffs (RDF) zu Beginn des Verfahrens;
d2) anschließendes Verbrennen des in den Bioreaktoren in Schritt c) vergärten, biologisch nicht abbaubaren Rückstands in einer Abfallverbrennungsanlage, die mit einem System zur Reinigung der Verbrennungsgase und Erzeugung von überhitztem Dampf mit ca. 400 °C und einem Druck von ca. 70 bar ausgestattet ist;
e) Verbrennen des in Schritt c) erhaltenen, gereinigten Biogases in einem herkömmlichen Heizkessel, der mit Zwischenüberhitzern ausgestattet ist, um die Temperatur des durch die Abfallverbrennungsanlage erzeugten Dampfes um ca. 100 °C zu erhöhen;
f) Verwenden des auf diese Weise erzeugten Dampfes in einer Turbine, die mit einem Wechselstromgenerator zur Stromerzeugung gekoppelt ist.

2. Verfahren nach Anspruch 1, wobei die im biologischen Trocknungsverfahren des Schrittes a) freigesetzte, verunreinigte Luft zur Verbrennung des Abfalls in Schritt d) verwendet wird.

3. Verfahren nach Anspruch 1 oder 2, wobei das biologische Trocknungsverfahren des Schrittes a) durch Zuführen des festen Hausmülls (FHM) in einen geschlossenen Raum vorgenommen wird, wo der Müll grob zerkleinert und auf einem gelochten Boden aufgehäuft wird, der in Bereiche unterteilt ist, durch die Luft hindurchströmt, wobei die aerobe Vergärung des faulbaren Müllanteils Wärme erzeugt, die Wasser zum Verdunsten bringt, welches durch den Luftstrom beseitigt wird.

4. Verfahren nach Anspruch 1, wobei die Ballen eine Größe von ca. 1 x 1 x 2 m und eine Dichte von ungefähr 700 kg/m³ aufweisen.

5. Verfahren nach Anspruch 1, wobei die Ballen vor Ort hergestellt oder aus anderen, über das Gebiet verteilten Produktionsstellen angeliefert werden.

6. Verfahren nach Anspruch 1, wobei die in Schritt c) verwendeten Bioreaktoren in Sektoren unterteilt sind, die große Vorratsbehälter bilden, die durch Einspritzen von Wasser in jeden von ihnen im Laufe der Jahre aktiviert werden können, derart, dass eine kontinuierliche Erzeugung von Biogas gewährleistet und am Ende der Lebensdauer eines jeden Sektors eine kontinuierliche Verfügbarkeit von biologisch nicht abbaubarem, erschöpftem Material, bestehend aus Inertstoffen und Kunststoffen, gegeben ist.

7. Verfahren nach Anspruch 6, wobei am Ende der Lebensdauer eines jeden Sektors des Bioreaktors Luft eingeblasen oder abgesaugt wird, derart, dass ein Teil des Restwassers beseitigt und ein geringer Feuchtigkeitsgehalt zwischen 20 und 25 % erhalten wird.

8. Verfahren nach Anspruch 7, wobei zur Beschleunigung der Verdunstung des Wassers und/oder zur Erhaltung einer geringen Restfeuchtigkeit des Abfalls heißes Wasser oder Luft-Gas-Gemische aus der Verbrennung verwendet werden.

9. Verfahren nach Anspruch 1, wobei das in Schritt c) erhaltene Biogas von möglichen Restspuren chlorierter Produkte durch Leiten desselben über ein Aktivkohlenbett gereinigt wird.

10. Verfahren nach Anspruch 1, wobei der in der Turbine entspannte Dampf eine Ausbeute des Wärmezyklus von ca. 32 % erlaubt.

11. System zur Energiegewinnung aus Abfall unter Durchführung des Verfahrens nach einem beliebigen Anspruch von 1 bis 10, umfassend:
- einen Biotrockner für das biologische Trocknen und Stabilisieren von festem Hausmüll (FHM) zur Erzeugung von Brennstoff aus Abfall (RDF), wobei der aus Abfall gewonnene Brennstoff (RDF) ein Material ist, das aktiviert werden kann und besonders reaktiv für die anaerobe Vergärung in Bioreaktoren ist;
- Mittel zum Verpressen des Materials in Ballen;
- wenigstens einen Bioreaktor, der mit den Ballen gespeist wird, um Biogas zu erzeugen;
- eine Abfallverbrennungsanlage, die mit einem Reinigungssystem für die Verbrennungsgase und die Erzeugung von überhitztem Dampf ausgestattet ist;
- einen Heizkessel zum Verbrennen eines Biogases, das von möglichen Restspuren chlorierter Produkte gereinigt ist, wobei der Heizkessel mit Zwischenüberhitzern ausgestattet ist, um die Temperatur des durch die Abfallverbrennungsanlage erzeugten Dampfes zu erhöhen;
- eine Turbine, die mit einem Wechselstromgenerator zur Stromerzeugung gekoppelt ist.

12. Verfahren nach Anspruch 11, wobei das System zur Reinigung der Verbrennungsgase aus einer Reihe von Zyklonen zur Verringerung eines Großteils der transportierten Feststoffe, einem Kühlturm zur Steuerung der Temperatur, einem mit Kalk und Aktivkohle gespeisten Reaktor zur Neutralisierung der Restazidität und Absorption der Mikroschadstoffe sowie einem Schlauchfilter zum Zurückhalten des Feinstaubs vor dem Auslass aus dem Schornstein besteht.

## Revendications

1. Procédé pour obtenir de l'énergie à partir de déchets, comprenant les étapes suivantes :
a) le bio-séchage des déchets urbains solides (MSW) pour transformer lesdits déchets en combustible dérivé des déchets (RDF), une matière homogène sèche avec une taille de morceaux d'environ 20 à environ 30 cm ;
b) le compactage de la matière obtenue à partir de l'étape a) en balles et le stockage des balles dans des bioréacteurs ;
c) l'activation des bioréacteurs par mouillage avec de l'eau pour produire du biogaz et un résidu non biodégradable par digestion anaérobie ;
c1) la purification du biogaz obtenu dans l'étape c) d'éventuelles traces résiduelles de produits chlorés ;
d1) la combustion au début du processus du combustible dérivé des déchets (RDF) obtenu à partir de l'étape a) ;
d2) la combustion successive du résidu non biodégradable digéré dans les bioréacteurs dans l'étape c) dans une chambre de combustion de déchets équipée d'un système pour la purification des gaz de combustion et la production de vapeur surchauffée à environ 400°C et à une pression d'environ 70 bar ;
e) la combustion du biogaz purifié obtenu dans l'étape c1) dans une chaudière conventionnelle équipée de resurchauffeurs pour augmenter la température de la vapeur produite par la chambre de combustion de déchets d'environ 100 °C ; et
f) l'utilisation de la vapeur produite de cette manière dans une turbine couplée à un alternateur pour la production d'énergie électrique.

2. Procédé selon la revendication 1, dans lequel l'air contaminé dégagé par le processus de bio-séchage de l'étape a) est utilisé pour la combustion de déchets dans l'étape d).

3. Procédé selon la revendication 1 ou 2, dans lequel ledit bio-séchage de l'étape a) s'effectue en alimentant les déchets urbains solides (MSW) dans un espace fermé, où les déchets sont broyés grossièrement et placés dans des tas sur un plancher avec des trous et qui est divisé en secteurs à travers lesquels de l'air est fait circuler, la digestion aérobie de la partie putrescible des déchets générant une vapeur qui fait évaporer l'eau qui est éliminée avec le courant d'air.

4. Procédé selon la revendication 1, dans lequel lesdites balles ont une taille d'environ 1 x 1 x 2 m et une densité d'environ 700 kg/m³.

5. Procédé selon la revendication 1, dans lequel lesdites balles sont produites sur le site ou transportées à partir de stations de production distribuées sur le territoire.

6. Procédé selon la revendication 1, dans lequel lesdits bioréacteurs utilisés dans l'étape c) sont divisés en secteurs formant de grands réservoirs de stockage qui peuvent être activés en injectant de l'eau dans chacun d'eux en séquence au fil des ans, de manière à fournir une production continue de biogaz et fournir, à la fin de la vie de chaque secteur, une disponibilité continue de matière épuisée non biodégradable, composée de matières inertes et plastiques.

7. Procédé selon la revendication 6, dans lequel, à la fin de la vie de chaque secteur du bioréacteur, de l'air est soufflé ou aspiré de manière à éliminer une partie de l'eau résiduelle et obtenir une faible teneur en humidité entre 20 et 25%.

8. Procédé selon la revendication 7, dans lequel, afin d'accélérer l'évaporation de l'eau et/ou obtenir une faible humidité résiduelle des déchets, de l'air chaud ou des mélanges air/gaz provenant de la combustion sont utilisés.

9. Procédé selon la revendication 1, dans lequel le biogaz produit dans l'étape c) est purifié d'éventuelles traces résiduelles de produits chlorés par un passage sur des lits de charbon actif.

10. Procédé selon la revendication 1, dans lequel la vapeur, détendue dans la turbine, permet d'obtenir un rendement du cycle thermique d'environ 32%.

11. Système pour obtenir de l'énergie à partir de déchets en mettant en oeuvre le procédé selon l'une quelconque des revendications 1 à 10, comprenant :
- un bio-sécheur pour le séchage et la stabilisation de déchets urbains solides (MSW) pour produire un combustible dérivé des déchets (RDF), ledit combustible dérivé des déchets (RDF) étant une matière qui peut être activée et est particulièrement réactive pour une digestion anaérobie dans des bioréacteurs ;
- des moyens pour compacter ladite matière en balles ;
- au moins un bioréacteur alimenté avec lesdites balles pour produire du biogaz ;
- une chambre de combustion de déchets équipée d'un système de purification des gaz de combustion et de production de vapeur surchauffée ;
- une chaudière pour la combustion d'un biogaz purifié d'éventuelles traces résiduelles de produits chlorés, la chaudière étant équipée de resurchauffeurs pour augmenter la température de la vapeur produite par la chambre de combustion de déchets ;
- une turbine couplée à un alternateur pour la production d'énergie électrique.

12. Système selon la revendication 11, dans lequel ledit système de purification des gaz de combustion comprend une série de cyclones pour réduire une partie substantielle des solides transportés, une tour de refroidissement pour contrôler la température, un réacteur alimenté avec de la chaux et des charbons actifs pour neutraliser l'acidité résiduelle et l'adsorption des micropolluants et un sac filtrant pour retenir la poussière fine avant l'émission au niveau de la cheminée.
